# EUROPÄISCHE PATENTSCHRIFT

(11) **EP 1 083 019 B1**
(45) Veröffentlichungstag und Bekanntmachung des Hinweises auf die Patenterteilung: **24.11.2004**
(21) Anmeldenummer: 00118931.5
(22) Anmeldetag: 01.09.2000
(51) Int. Cl.: B23K 26/08, B23K 26/38, B23K 37/04

(54) **Maschine und Verfahren zum thermischen Schneiden, insbesondere zum Laserschneiden, von Werkstücken**
Machine and process for thermal cutting, in particular for laser cutting of workpieces
Machine et procédé de coupage thermique, en particulier de coupage laser de pièces

(30) Priorität: 09.09.1999 DE 19943043
(43) Veröffentlichungstag der Anmeldung: 14.03.2001
(73) Patentinhaber: Trumpf Werkzeugmaschinen GmbH + Co. KG, 71254 Ditzingen (DE)
(72) Erfinder: Klingel, Hans, Dr., 71696 Möglingen (DE)
(74) Vertreter: KOHLER SCHMID + PARTNER

(56) Entgegenhaltungen:
- US-A- 4 409 463
- US-A- 4 940 880
- US-A- 5 703 340
- PATENT ABSTRACTS OF JAPAN vol. 014, no. 069 (M-0932), 8. Februar 1990 (1990-02-08) & JP 01 289590 A (SHINKO KOGYO KK), 21. November 1989 (1989-11-21)

## Beschreibung

Die Erfindung betrifft eine Maschine zum thermischen Schneiden von Werkstücken, insbesondere eine Laserschneidmaschine, mit wenigstens einer Werkstückauflage für das zu bearbeitende Werkstück sowie zumindest einer Schneideinrichtung. Die Erfindung betrifft des weiteren ein mit einer Maschine der beschriebenen Art durchführbares Verfahren zum thermischen Schneiden, insbesondere zum Laserschneiden, von Werkstücken, wobei nach der Bearbeitung eines Werkstückes freies Schneidgut und eine Werkstückauflage relativ zueinander bewegt werden.

Der nächstkommende Stand der Technik ist in US-A-4 409 463 gezeigt.

Beim thermischen Schneiden beispielsweise mittels Laser- oder Brennschneidmaschinen wird das betreffende Werkstück im Schnittbereich verflüssigt. In der Folge ist gelegentlich zu beobachten, daß an gattungsgemäßen Maschinen bzw. im Rahmen gattungsgemäßer Verfahren nach der Werkstückbearbeitung vorliegendes Schneidgut - insbesondere durch die schneidende Bearbeitung des betreffenden Werkstücks hergestellte Werkstückteile, bei der Bearbeitung angefallener Schneidabfall oder das bearbeitete, beispielsweise angeschnittene Werkstück selbst - beim Erkalten in dem zunächst verflüssigten Bereich mit der Werkstückauflage verschweißt wird. Um eine Behinderung des betreffenden oder nachfolgender Arbeitsabläufe durch das an der Werkstückauflage haftende Schneidgut zu vermeiden, ist das an der Werkstückauflage haftende Schneidgut zu entfernen.

Eine dies mit einfachen Mitteln erlaubende Maschine sowie ein entsprechendes Verfahren bereitzustellen, ist Aufgabe der vorliegenden Erfindung.

Vorrichtungsbezogen wird das erfindungsgemäße Ziel mittels einer Maschine der eingangs beschriebenen Art erreicht, welche wenigstens eine maschinelle Vorrichtung zur Erzeugung einer Relativbewegung der Werkstückauflage und von nach der Bearbeitung eines Werkstücks an der Werkstückauflage haftendem Schneidgut umfaßt, wobei die genannte Vorrichtung zumindest einen Anschlag für an der Werkstückauflage haftendes Schneidgut aufweist und der Anschlag sowie die Werkstückauflage unter Lösen von an letzterer haftendem Schneidgut relativ zueinander bewegbar sind.

Bevorzugte Ausführungsformen der erfindungsgemäßen Maschine ergeben sich aus den Ansprüchen 2 bis 15.

Die Wahl der in Anspruch 2 angegebenen Richtung der Relativbewegung der Werkstückauflage und des Anschlages für an letzterer haftendes Schneidgut empfiehlt sich insbesondere aufgrund des Umstandes, daß mehrere bei der Werkstückbearbeitung anfallende und mit der Werkstückauflage verschweißte Schneidgutteile gegebenenfalls in der anspruchsgemäßen Richtung nebeneinander liegen und folglich bei entsprechend gerichteter Relativbewegung von Anschlag und Werkstückauflage kinematisch einfach erreicht und von der Werkstückauflage gelöst werden können. Zudem findet an Maschinen der vorliegenden Art ohnehin eine Mehrzahl anspruchsgemäß gerichteter Relativbewegungen unter Beteiligung der Werkstückauflage statt, die sich bei Realisierung des Merkmals von Anspruch 2 dann auch zum Entfernen von Schneidgut von der Werkstückauflage nutzen lassen.

Die in Anspruch 3 beschriebene Maßnahme ist insbesondere für erfindungsgemäße Maschinen mit ortsfester Werkstückauflage von Vorteil. Der Anschlag für an der Werkstückauflage haftendes Schneidgut kann dann bewegungsmäßig mit ohnehin gegenüber der Werkstückauflage bewegten Maschinenteilen gekoppelt werden.

Im Interesse eines konstruktiv möglichst einfachen Aufbaus der Gesamtanordnung ist es ratsam, einzelne Maschinenteile für die Ausübung mehrerer Funktionen auszulegen. Dem werden die in den Ansprüchen 4 bis 9 beschriebenen Ausführungsformen der erfindungsgemäßen Maschine gerecht.

Besonders zu erwähnen ist die in Anspruch 6 beschriebene Maschinenbauart. Im Falle derartiger Maschinen können bei der Werkstückbearbeitung anfallende und nicht an der Werkstückauflage haftende, d.h. freie Werkstückteile - seien es bei der Bearbeitung zugeschnittene Teile, seien es Abfallteile - unmittelbar nach Beendigung des Bearbeitungsvorganges dazu verwendet werden, als Folge der Bearbeitung mit der Werkstückauflage verschweißtes Schneidgut von der Werkstückauflage zu lösen. Auf diese Art und Weise kann der sich negativ auf die erreichbaren Taktzeiten auswirkende Zeitaufwand für das Lösen von Schneidgut von der Werkstückauflage minimiert werden.

Die Ansprüche 10 bis 13 beschreiben Ausführungsformen der erfindungsgemäßen Maschine, im Falle derer eine Bewegung der Werkstückauflage für das Entfernen von an ihr haftendem Schneidgut genutzt wird. Besonders platzsparende Maschinenbauarten ergeben sich dabei aus den Ansprüchen 12 und 13.

Einem automatisierten Betrieb der erfindungsgemäßen Maschine dient das Merkmal von Anspruch 14, wonach die Vorrichtung zur Erzeugung einer Relativbewegung von Werkstückauflage und an dieser haftendem Schneidgut mittels der Rechnersteuerung der Maschine steuerbar ist.

Ebenfalls im Zusammenhang mit dem automatisierten Betrieb der erfindungsgemäßen Maschine ist das kennzeichnende Merkmal von Anspruch 15 zu sehen. Infolge der dort beschriebenen Auslegung der Rechnersteuerung der Maschine derart, daß die anspruchsgemäße Relativbewegung der Werkstückauflage sowie des Anschlages für an der Werkstückauflage haftendes Schneidgut nach einer schneidenden Werkstückbearbeitung routinemäßig erfolgt, gestaltet sich der automatisierte Maschinenbetrieb verhältnismäßig einfach. So kann unter Vermeidung des ansonsten erforderlichen konstruktiven und steuerungstechnischen Aufwandes davon abgesehen werden, nach der Werkstückbearbeitung zunächst die Werkstückauflage auf an ihr haftendes Schneidgut hin zu überprüfen und die Relativbewegung von Werkstückauflage und Anschlag zum Lösen von Schneidgut nur unter der Voraussetzung einzuleiten, daß anläßlich der Überprüfung tatsächlich an der Werkstückauflage haftendes Schneidgut festgestellt worden ist.

Anspruch 16 ist die Lösung der vorstehend angegebenen verfahrensbezogenen Aufgabe zu entnehmen. Erfindungsgemäß werden demnach im Rahmen eines Verfahrens der eingangs beschriebenen Art freies Schneidgut und die Werkstückauflage nach der Bearbeitung eines Werkstückes unter Anschlagen von freiem Schneidgut an an der Werkstückauflage haftendem Schneidgut quer zu der Richtung der Werkstückabstützung an der Werkstückauflage relativ zueinander bewegt. Durch diese Relativbewegung läßt sich an der Werkstückauflage haftendes Schneidgut mittels frei beweglichen Schneidgutes zuverlässig von der Werkstückauflage lösen. Dabei kann der Betrag der beschriebenen Relativbewegung in Querrichtung der Werkstückabstützung an der Werkstückauflage sehr gering sein und im Millimeterbereich liegen.

Anspruch 17 beschreibt eine bevorzugte Variante des erfindungsgemäßen Verfahrens, die sich dadurch auszeichnet, daß das als Anschlag genutzte freie Schneidgut allenfalls über eine kurze Distanz auf der Werkstückauflage gleitet und dementsprechend maximal einer geringen reibenden Beanspruchung ausgesetzt ist.

Nachfolgend wird die Erfindung anhand schematischer Darstellungen zu Ausführungsbeispielen näher erläutert. Es zeigen:
- Figur 1: eine erste Bauart einer Laserschneidmaschine mit einem vergrößerten Darstellungsdetail,
- Figur 2: eine zweite Bauart einer Laserschneidmaschine mit einem vergrößerten Darstellungsdetail,
- Figur 3: eine dritte Bauart einer Laserschneidmaschine,
- Figur 4: eine vierte Bauart einer Laserschneidmaschine,
- Figur 5: eine fünfte Bauart einer Laserschneidmaschine und
- Figur 6: eine sechste Bauart einer Laserschneidmaschine.

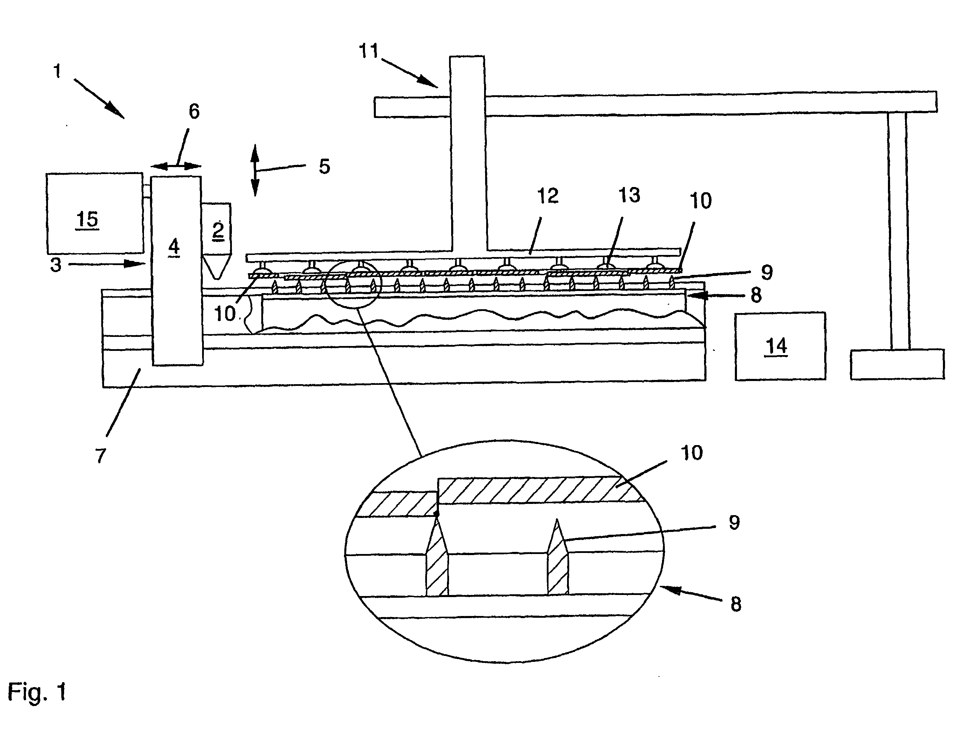

Gemäß Figur 1 umfaßt eine Laserschneidmaschine 1 eine Schneideinrichtung in Form eines Laserschneidkopfs 2, der in bekannter Weise an einem Maschinenportal 3 gehalten wird, von welchem in Figur 1 lediglich einer der beiden vertikalen Träger, nämlich ein vertikaler Träger 4, zu erkennen ist. An einem nicht gezeigten horizontalen Träger des Maschinenportals 3 ist der Laserschneidkopf 2 senkrecht zu der Zeichenebene von Figur 1 angetrieben verfahrbar. Zusätzlich ist der Laserschneidkopf 2 in Richtung eines Doppelpfeiles 5 heb- und senkbar. Das Maschinenportal 3 läßt sich gemeinschaftlich mit dem Laserschneidkopf 2 in Richtung eines Doppelpfeiles 6 verfahren und ist bei seiner Verfahrbewegung an einem Maschinengrundrahmen 7 geführt.

Von dem Maschinenportal 3 übergriffen wird eine ortsfeste Werkstückauflage 8 mit rippenartigen Vorsprüngen 9, die im dargestellten Beispielsfall zur Lagerung eines Werkstückes in Form eines Bleches dienen.

Ebenfalls Teil der Laserschneidmaschine 1 ist eine Werkstück-Transportvorrichtung 11 üblicher Bauart. Ein als Hubrahmen 12 ausgebildeter Halter der Werkstück-Transportvorrichtung 11 ist in den drei Koordinatenrichtungen des Raumes beweglich und trägt an seiner Unterseite eine Mehrzahl pneumatischer Sauger 13.

Eine Rechnersteuerung 14 dient zur Steuerung sämtlicher Maschinenfunktionen der Laserschneidmaschine 1 einschließlich der Werkstück-Transportvorrichtung 11 sowie eines Lasergenerators 15, mittels dessen der Laserschneidstrahl zur Werkstückbearbeitung erzeugt wird.

In Figur 1 gezeigt sind die Verhältnisse an der Laserschneidmaschine 1 nach Abschluß der Bearbeitung des Bleches. Zuvor war zunächst das unbearbeitete Blech mittels der Werkstück-Transportvorrichtung 11 auf der Werkstückauflage 8 abgelegt worden. Anschließend war das zu bearbeitende Blech mit einem entsprechenden Trennschnitt des Laserschneidkopfs 2 senkrecht zu der Zeichenebene in zwei Hälften zerlegt worden, ehe dann aus beiden Blechhälften mittels des entsprechend verfahrenen Laserschneidkopfs 2 einzelne Konturen als Schneidabfall ausgeschnitten wurden. Als Schneidgut fielen bei der Werkstückbearbeitung dementsprechend zwei zugeschnittene Blechteile 10 und der genannte Schneidabfall an. Dabei handelt es sich bei den zugeschnittenen Blechteilen 10 um unmittelbar nach der Blechbearbeitung lose auf der Werkstückauflage 8 liegendes freies Schneidgut. Der Schneidabfall hingegen war - wie das vergrößerte Darstellungsdetail von Figur 1 zeigt - unerwünschterweise mit einzelnen der rippenartigen Vorsprünge 9 der Werkstückauflage 8 verschweißt worden. Der Hubrahmen 12 der Werkstück-Transportvorrichtung 11 hatte die zugeschnittenen Blechteile 10 nach der Bearbeitung in Richtung der Werkstückabstützung an der Werkstückauflage 8 von letzterer in die Position gemäß Figur 1 angehoben. Der Betrag dieser Hubbewegung war kleiner als die Dicke des an der Werkstückauflage 8 haftenden Schneidabfalls, d.h. kleiner als die Abmessung des genannten Schneidabfalls in Hubrichtung und es ergaben sich die Verhältnisse gemäß Figur 1.

Ausgehend von der Situation nach Figur 1 werden nun die an dem Hubrahmen 12 gehaltenen zugeschnittenen Blechteile 10 mittels der Werkstück-Transportvorrichtung 11 in horizontaler Richtung, d.h. quer zu der Richtung der Werkstückabstützung an der Werkstückauflage 8, bewegt. Dabei wirken die zugeschnittenen Blechteile 10 als Anschläge für den an der Werkstückauflage 8 haftenden Schneidabfall und sorgen dadurch für dessen Losbrechen von den betreffenden rippenartigen Vorsprüngen 9. Anschließend lassen sich die zugeschnittenen Blechteile 10 mittels der Werkstück-Transportvorrichtung 11 aus dem Nahbereich der Werkstückauflage 8 entfernen. Die vorstehend beschriebene horizontale Relativbewegung des Hubrahmens 12 mit den daran gehaltenen zugeschnittenen Blechteilen 10 einerseits sowie der Werkstückauflage 8 andererseits wird von der Rechnersteuerung 14 der Laserschneidmaschine 1 routinemäßig bewirkt, d.h. diese Relativbewegung erfolgt unabhängig davon, ob an der Werkstückauflage 8 tatsächlich Schneidabfall haftet oder nicht. Der von der Werkstückauflage 8 gelöste Schneidabfall kann ebenfalls abgeführt werden. Bevorzugtermaßen besitzt die Werkstückauflage 8 zu diesem Zweck eine Gitterstruktur, durch deren Öffnungen der Schneidabfall hindurchfallen kann, ehe er von dem Bedienungspersonal der Laserschneidmaschine 1 endgültig entfernt wird.

Anstelle der vorstehend beschriebenen, senkrecht zueinander verlaufenden Teilbewegungen der zugeschnittenen Blechteile 10 kann zum Lösen des Schneidabfalls von der Werkstückauflage 8 auch eine stetige, schräggerichtete Bewegung der zugeschnittenen Blechteile 10 relativ zu der Werkstückauflage 8 und dem daran haftenden Schneidabfall ausgeführt werden.

Wie sich aus dem Vorstehenden ergibt, wird im Falle der Laserschneidmaschine 1 gemäß Figur 1 die Vorrichtung zur Erzeugung der zum Lösen des Schneidabfalls von der Werkstückauflage 8 erforderlichen Relativbewegung von Schneidabfall und Werkstückauflage 8 gebildet von der Werkstück-Transportvorrichtung 11 mit den daran gehaltenen und als Anschläge für den zu lösenden Schneidabfall dienenden zugeschnittenen Blechteilen 10.

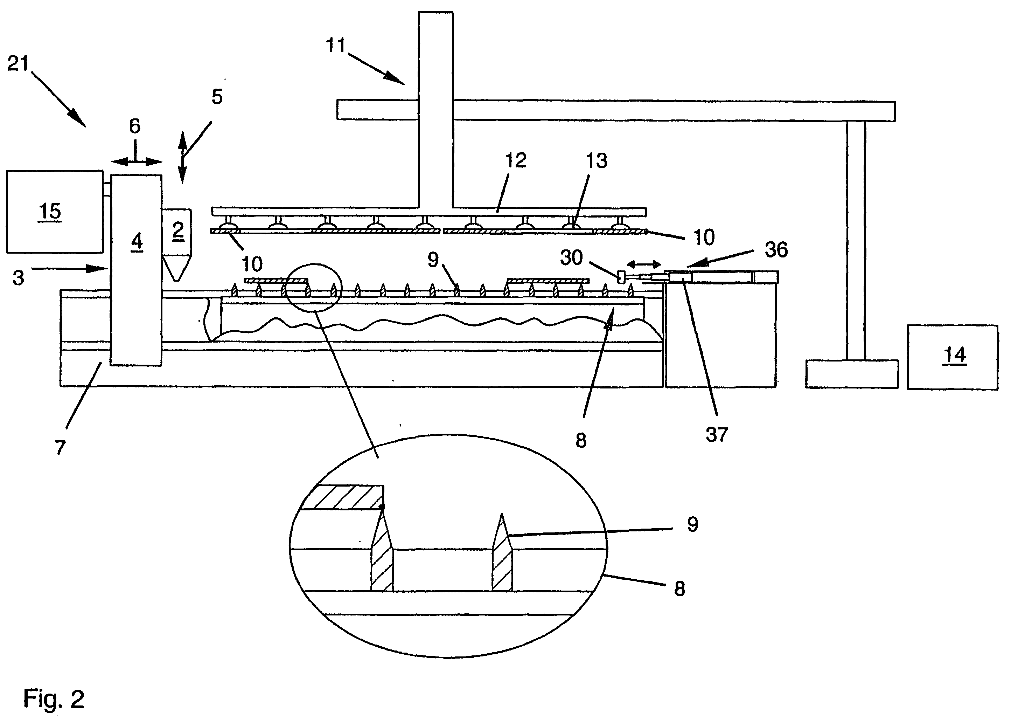

Eine von der Laserschneidmaschine 1 gemäß Figur 1 abweichende Möglichkeit zum Entfernen von an einer Werkstückauflage haftendem Schneidgut in Form von Schneidabfall zeigt Figur 2 für eine Laserschneidmaschine 21. Diese besitzt eine ausschließlich als solche eingesetzte Vorrichtung 36 zur Erzeugung einer Relativbewegung der Werkstückauflage 8 und von an dieser haftendem Schneidabfall. Die Vorrichtung 36 besteht dabei im wesentlichen aus einem pneumatischen Teleskopzylinder 37 und einem daran angebrachten Anschlag 30 für an der Werkstückauflage 8 haftenden Schneidabfall. Ausgefahren wird der Teleskopzylinder 37, sobald die Bearbeitung des betreffenden Bleches beendet und die zugeschnittenen Blechteile 10 mittels der Werkstück-Transportvorrichtung 11 von der Werkstückauflage 8 abgehoben sind. Nachdem der Schneidabfall mittels des Anschlages 30 von den rippenartigen Vorsprüngen 9 der Werkstückauflage 8 losgebrochen ist, wird der Teleskopzylinder 37 wieder in seine Ausgangslage eingefahren. Zur Steuerung des Teleskopzylinders 37 dient die Rechnersteuerung 14 der Laserschneidmaschine 21.

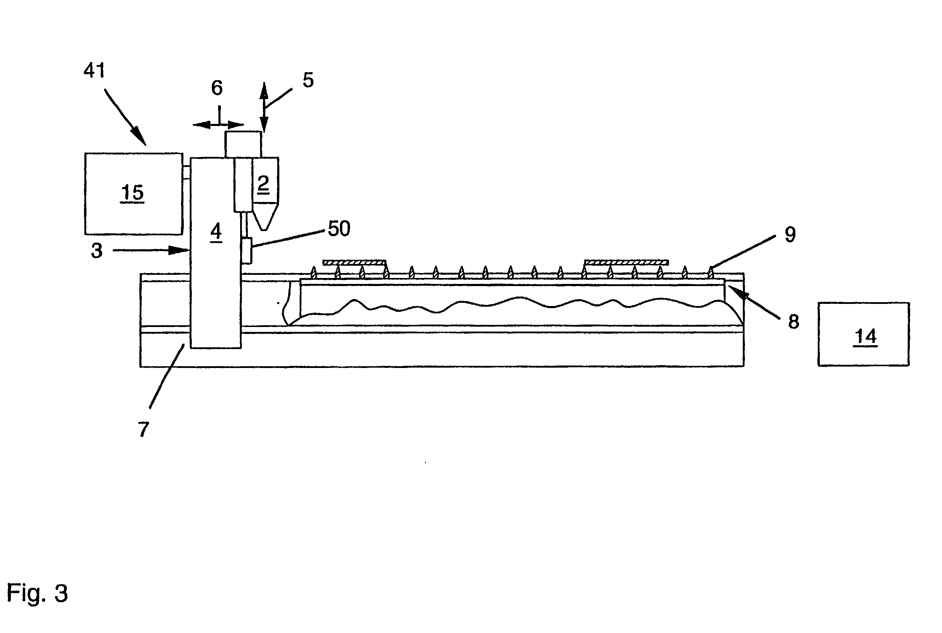

Gemäß Figur 3 dient im Falle einer Laserschneidmaschine 41 das in Richtung des Doppelpfeils 6 verfahrbare Maschinenportal 3 mit einem daran angebrachten Anschlag 50 als Vorrichtung zur Erzeugung der Relativbewegung von Werkstückauflage 8 und daran haftendem Schneidabfall. Der Anschlag 50 ist dabei in Richtung des Doppelpfeils 5 heb- und senkbar. Während der Werkstückbearbeitung mittels des über das zu bearbeitende Blech bewegten Laserschneidkopfs 2 ist der Anschlag 50 angehoben und befindet sich in seiner Ruhestellung. Nach Beendigung des Bearbeitungsvorganges werden die dabei hergestellten und in Figur 3 der Einfachheit halber nicht dargestellten zugeschnittenen Blechteile mittels einer ebenfalls nicht gezeigten Werkstück-Transportvorrichtung von der Werkstückauflage 8 abgehoben, ehe der Anschlag 50 aus seiner Ruhestellung in seine in Figur 3 dargestellte Arbeitsstellung verfährt. Anschließend bewegt sich das Maschinenportal 3 ausgehend von seiner in Figur 3 gezeigten Ausgangsposition in der Darstellung nach rechts und bricht dabei mit dem Anschlag 50 den mit den rippenartigen Vorsprüngen 9 der Werkstückauflage 8 verschweißten Schneidabfall los. Auch die beschriebenen Funktionen des Anschlages 50 sowie des Maschinenportals 3 werden mittels der Rechnersteuerung 14 der Laserschneidmaschine 41 gesteuert.

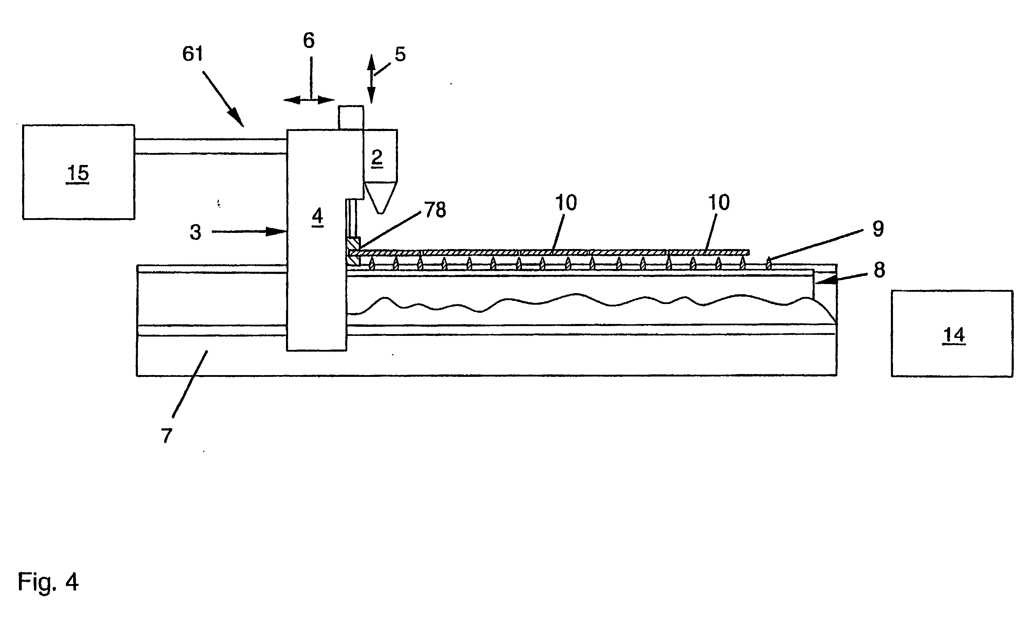

Auch im Falle einer Laserschneidmaschine 61, wie sie Figur 4 zeigt, ist das Maschinenportal 3 Teil der Vorrichtung zur Erzeugung einer Relativbewegung der Werkstückauflage 8 sowie von an dieser haftendem Schneidabfall. Als Anschlag für den zu beseitigenden Schneidabfall dienen im Falle der Laserschneidmaschine 61 entsprechend der Laserschneidmaschine 1 nach Figur 1 und abweichend von den Laserschneidmaschinen 21, 41 gemäß den Figuren 2 und 3 die zugeschnittenen Blechteile 10. Mittels eines an dem Maschinenportal 3 angebrachten Halters in Form eines Greifers 78 wird einer der zugeschnittenen Blechteile 10 nach Abschluß seines Zuschnittes erfaßt und ausgehend von seiner in Figur 4 gezeigten Ausgangsposition in der Darstellung nach rechts verschoben. Dabei verschiebt er auch den anderen zugeschnittenen Blechteil 10 entsprechend. Der an den rippenartigen Vorsprüngen 9 der Werkstückauflage 8 angeschweißte Schneidabfall wird dadurch losgebrochen. Der Betrag der mittels des Maschinenportals 3 bewirkten Relativbewegung der zugeschnittenen Blechteile 10 gegenüber der Werkstückauflage 8 bzw. dem daran haftenden Schneidabfall liegt im Millimeterbereich. Auch die beschriebene Relativbewegung des Maschinenportals 3 mit dem daran gehaltenen zugeschnittenen Blechteil 10 und der Werkstückauflage 8 sowie die Ankoppelung des Greifers 78 an das Blechteil 10 werden mittels der Rechnersteuerung 14 der Laserschneidmaschine 61 gesteuert. Das Maschinenportal 3 mit dem Greifer 78 läßt sich auch als Werkstück-Transportvorrichtung zum Beschicken der Werkstückauflage 8 mit zu bearbeitenden Blechen und/oder zum Entfernen der zugeschnittenen Blechteile 10 von der Werkstückauflage 8 nutzen und kann dann zusätzlich oder alternativ zu einer Werkstück-Transportvorrichtung 11 der vorstehend beschriebenen Art eingesetzt werden.

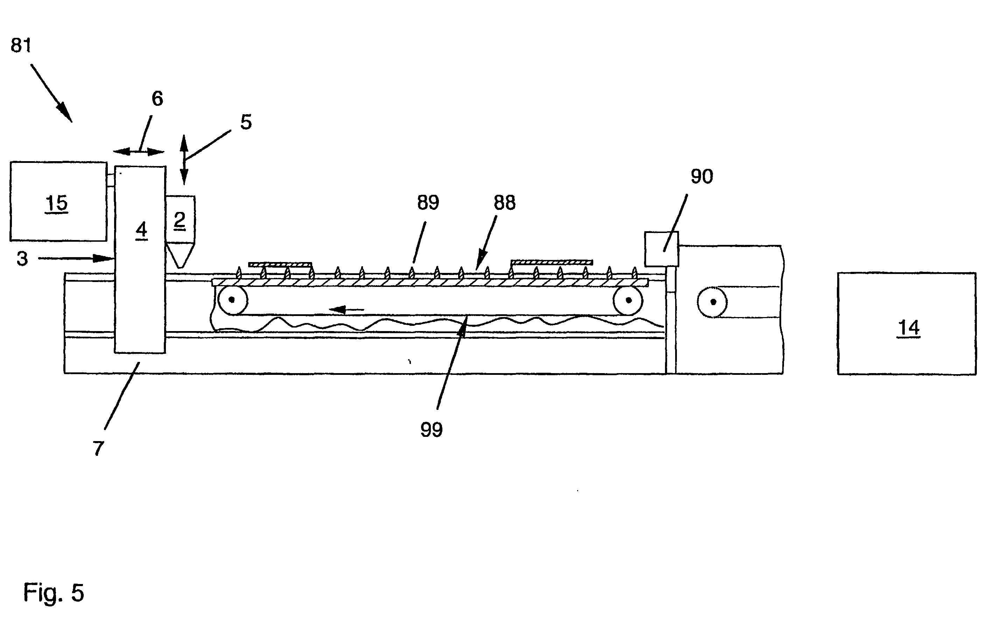

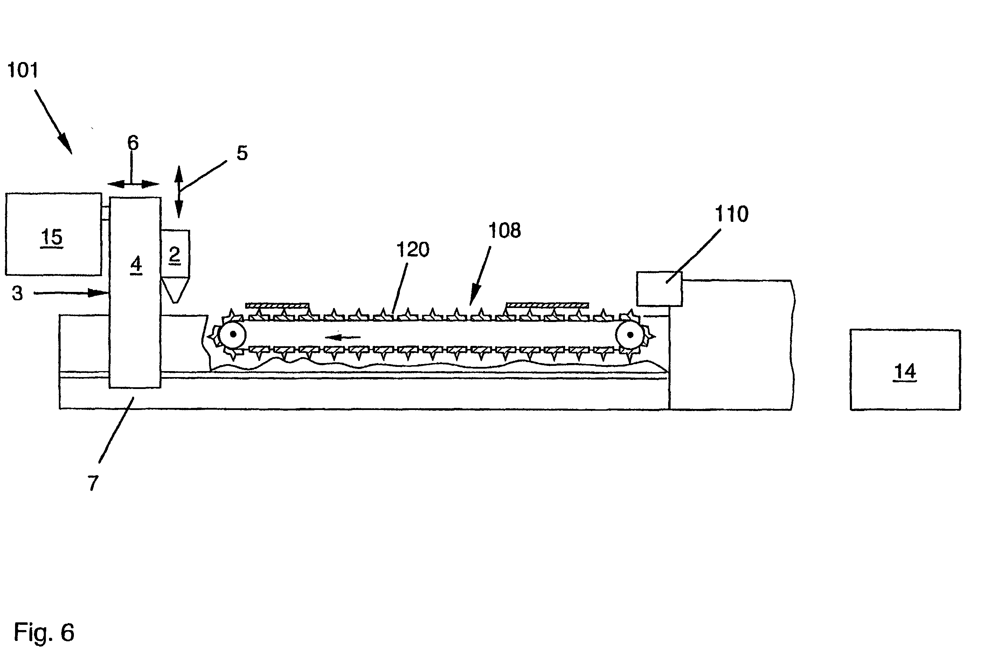

In den Figuren 5 und 6 dargestellte Laserschneidmaschinen 81, 101 unterscheiden sich von den zuvor beschriebenen Laserschneidmaschinen 1, 21, 41, 61 dadurch, daß Werkstückauflagen 88, 108 gegenüber ortsfesten Anschlägen 90, 110 beweglich sind, um auf diese Art und Weise die zum Lösen des Schneidabfalls erforderliche Relativbewegung von Schneidabfall und jeweiliger Werkstückauflage 88, 108 zu erzeugen.

Gemäß Figur 5 wird dabei die Werkstückauflage 88 mittels eines umlaufenden Antriebsbandes 99 in seiner Gesamtheit in horizontaler Richtung, d.h. quer zu der Richtung der Werkstückabstützung an der Werkstückauflage 88 verschoben. An rippenartigen Vorsprüngen 89 der Werkstückauflage 88 haftender Schneidabfall läuft dabei auf den Anschlag 90 auf und wird dadurch von der Werkstückauflage 88 losgebrochen.

Nach Art eines Abstreifers wirkt auch der Anschlag 110 der Laserschneidmaschine 101 gemäß Figur 6. Abweichend von der Maschinenbauart nach Figur 5 ist die Werkstückauflage 108 der Laserschneidmaschine 101 allerdings an einem Trum 120 einer endlos umlaufenden Rippenkette ausgebildet.

Die Werkstückauflagen 88, 108 bilden mit dem zugehörigen Anschlag 90, 110 die jeweilige Vorrichtung zur Erzeugung der Relativbewegung der Werkstückauflage 88, 108 und des an dieser haftenden Schneidabfalls.

Abgesehen von den aufgezeigten Unterschieden stimmen die vorstehend beschriebenen Maschinenbauarten in Aufbau und Funktionsweise miteinander überein. Insbesondere können auch die Laserschneidmaschinen 41, 61, 81, 101 mit einer Werkstück-Transportvorrichtung 11 gemäß den Figuren 1 und 2 ausgerüstet sein. Einander entsprechenden Maschinenbauteilen sind in den verschiedenen Darstellungen identische Bezugszeichen zugeordnet.

## Patentansprüche

1. Maschine zum thermischen Schneiden von Werkstücken, insbesondere Laserschneidmaschine, mit wenigstens einer Werkstückauflage (8, 88, 108) für das zu bearbeitende Werkstück sowie zumindest einer Schneideinrichtung (2), **gekennzeichnet durch** wenigstens eine maschinelle Vorrichtung (10, 11; 36; 3, 50; 3, 10, 78; 88, 90; 108, 110) zur Erzeugung einer Relativbewegung der Werkstückauflage (8, 88, 108) und von nach der Bearbeitung eines Werkstücks an der Werkstückauflage (8, 88, 108) haftendem Schneidgut, mit zumindest einem Anschlag (10, 30, 50, 90, 110) für an der Werkstückauflage (8, 88, 108) haftendes Schneidgut, wobei der Anschlag (10, 30, 50, 90, 110) und die Werkstückauflage (8, 88, 108) unter Lösen von an letzterer haftendem Schneidgut relativ zueinander bewegbar sind.

2. Maschine nach einem der vorhergehenden Ansprüche, **dadurch gekennzeichnet, daß** die Richtung der Relativbewegung der Werkstückauflage (8, 88, 108) und des Anschlages (10, 30, 50, 90, 110) für an letzterer haftendes Schneidgut quer zu der Richtung der Werkstückabstützung an der Werkstückauflage (8, 88, 108) verläuft.

3. Maschine nach einem der vorhergehenden Ansprüche, **dadurch gekennzeichnet, daß** der Anschlag (10, 30, 50) für an der Werkstückauflage (8) haftendes Schneidgut an der Werkstückauflage (8) entlang bewegbar ist.

4. Maschine nach einem der vorhergehenden Ansprüche mit zumindest einer Werkstück-Transportvorrichtung (11; 3, 78) zum Beschicken der Werkstückauflage (8) mit wenigstens einem zu bearbeitenden Werkstück und/oder zum Entfernen von Schneidgut von der Werkstückauflage (8) nach der Werkstückbearbeitung, wobei die Werkstück-Transportvorrichtung (11; 3, 78) wenigstens einen Halter (12, 78) für das zu bearbeitende Werkstück und/oder für zu entfernendes Schneidgut aufweist und die Werkstückauflage (8) und der Halter (12, 78) relativ zueinander bewegbar sind, **dadurch gekennzeichnet, daß** die Werkstück-Transportvorrichtung (11; 3, 78) wenigstens Teil der Vorrichtung (10, 11; 3, 10, 78) zur Erzeugung einer Relativbewegung von Werkstückauflage (8) und an dieser haftendem Schneidgut ist, wobei der Anschlag (10) für an der Werkstückauflage (8) haftendes Schneidgut an dem Halter (12, 78) der Werkstück-Transportvorrichtung (11; 3, 78) vorgesehen ist.

5. Maschine nach einem der vorhergehenden Ansprüche, **dadurch gekennzeichnet, daß** als Anschlag (10) für an der Werkstückauflage (8) haftendes Schneidgut wenigstens ein an dem Halter (12, 78) der Werkstück-Transportvorrichtung (11; 3, 78) gehaltenes zu bearbeitendes Werkstück und/oder entsprechendes, mit dem Halter (12, 78) relativ zu der Werkstückauflage (8) bewegbares freies Schneidgut (10) vorgesehen ist.

6. Maschine nach einem der vorhergehenden Ansprüche mit zumindest einer Werkstück-Transportvorrichtung (11; 3, 78) zum Entfernen von freiem Schneidgut (10) von der Werkstückauflage (8) nach der Bearbeitung eines Werkstückes, wobei die Werkstückauflage (8) und an dem Halter (12, 78) der Werkstück-Transportvorrichtung (11; 3, 78) gehaltenes freies Schneidgut (10) relativ zueinander bewegbar sind, **dadurch gekennzeichnet, daß** als Anschlag (10) für an der Werkstückauflage (8) haftendes Schneidgut der vorausgegangenen Werkstückbearbeitung dabei angefallenes, an dem Halter (12, 78) der Werkstück-Transportvorrichtung (11; 3, 78) gehaltenes freies Schneidgut (10) vorgesehen ist.

7. Maschine nach einem der vorhergehenden Ansprüche, **dadurch gekennzeichnet, daß** die Werkstückauflage (8) und das als Anschlag (10) für an der Werkstückauflage (8) haftendes Schneidgut dienende Werkstück bzw. das entsprechende freie Schneidgut (10) relativ zueinander quer zu der Richtung der Werkstückabstützung an der Werkstückauflage (8) bewegbar sind.

8. Maschine nach einem der vorhergehenden Ansprüche, wobei die Schneideinrichtung (2) und die Werkstückauflage (8) angetrieben relativ zueinander bewegbar sind, **dadurch gekennzeichnet, daß** wenigstens ein Anschlag (50, 10) für an der Werkstückauflage (8) haftendes Schneidgut mit der Schneideinrichtung (2) gekoppelt relativbewegbar ist.

9. Maschine nach einem der vorhergehenden Ansprüche, wobei die Schneideinrichtung (2) an einem Maschinenportal (3) gehalten ist, welches die Werkstückauflage (8) übergreift und quer zu der Richtung der Werkstückabstützung an der Werkstückauflage (8) relativ zu letzterer angetrieben bewegbar ist, **dadurch gekennzeichnet, daß** wenigstens ein Anschlag (50, 10) für an der Werkstückauflage (8) haftendes Schneidgut an dem Maschinenportal (3) angebracht ist.

10. Maschine nach einem der vorhergehenden Ansprüche, **dadurch gekennzeichnet, daß** die Werkstückauflage (88, 108) angetrieben an wenigstens einem Anschlag (90, 110) für an ihr haftendes Schneidgut entlang bewegbar ist.

11. Maschine nach einem der vorhergehenden Ansprüche, **dadurch gekennzeichnet, daß** die Werkstückauflage (88, 108) quer zu der Richtung der Werkstückabstützung an der Werkstückauflage (88, 108) an wenigstens einem Anschlag (90, 110) für an ihr haftendes Schneidgut entlang bewegbar ist.

12. Maschine nach einem der vorhergehenden Ansprüche, **dadurch gekennzeichnet, daß** die Werkstückauflage (108) unter wenigstens einfacher Umlenkung in Richtung der Werkstückabstützung an der Werkstückauflage (108) quer zu der genannten Richtung bewegbar ist.

13. Maschine nach einem der vorhergehenden Ansprüche, **dadurch gekennzeichnet, daß** die Werkstückauflage (108) an einem Trum (120) wenigstens einer endlos umlaufend bewegbaren Kette und/oder eines entsprechenden Bandes oder dergleichen ausgebildet und die genannte Kette und/oder das genannte Band oder dergleichen an wenigstens einem Anschlag (110) für an der Werkstückauflage (108) haftendes Schneidgut entlang bewegbar ist.

14. Maschine nach einem der vorhergehenden Ansprüche mit einer Rechnersteuerung (14) für Maschinenfunktionen, **dadurch gekennzeichnet, daß** die Vorrichtung (10, 11; 36; 3, 50; 3, 10, 78; 88, 90; 108, 110) zur Erzeugung einer Relativbewegung von Werkstückauflage (8, 88, 108) und an dieser haftendem Schneidgut mittels der Rechnersteuerung (14) steuerbar ist.

15. Maschine nach einem der vorhergehenden Ansprüche, **dadurch gekennzeichnet, daß** der Anschlag (10, 30, 50, 90, 110) für an der Werkstückauflage (8, 88, 108) haftendes Schneidgut und die Werkstückauflage (8, 88, 108) nach einer schneidenden Werkstückbearbeitung mittels der Rechnersteuerung (14) routinemäßig quer zu der Richtung der Werkstückabstützung an der Werkstückauflage (8, 88, 108) gesteuert relativ zueinander bewegbar sind, gegebenenfalls unter Anschlagen des Anschlages (10, 30, 50, 90, 110) an an der Werkstückauflage (8, 88, 108) haftendem Schneidgut.

16. Verfahren zum thermischen Schneiden, insbesondere zum Laserschneiden, von Werkstücken, durchgeführt mit einer Maschine nach einem der vorhergehenden Ansprüche, wobei nach der Bearbeitung eines Werkstückes freies Schneidgut (10) und eine Werkstückauflage (8) relativ zueinander bewegt werden, **dadurch gekennzeichnet, daß** nach der Bearbeitung eines Werkstückes freies Schneidgut (10) und die Werkstückauflage (8) unter Anschlagen von freiem Schneidgut (10) an an der Werkstückauflage (8) haftendem Schneidgut quer zu der Richtung der Werkstückabstützung an der Werkstückauflage (8) relativ zueinander bewegt werden.

17. Verfahren nach Anspruch 16, **dadurch gekennzeichnet, daß** das freie Schneidgut (10) und die Werkstückauflage (8) vor oder mit ihrer Relativbewegung quer zu der Richtung der Werkstückabstützung an der Werkstückauflage (8) in Richtung der Werkstückabstützung an der Werkstückauflage (8) um einen Betrag relativ zueinander bewegt werden, der kleiner ist als die Abmessung von an der Werkstückauflage (8) haftendem Schneidgut in der letztgenannten Richtung.

## Claims

1. A machine for thermal cutting of workpieces, especially a laser cutting machine, having at least one workpiece support (8, 88, 108) for the workpiece to be machined and at least one cutting device (2), **characterised by** at least one mechanical arrangement (10, 11; 36; 3, 50; 3, 10, 78; 88, 90; 108, 110) for producing relative movement of the workpiece support (8, 88, 108) and of cut material adhering to the workpiece support (8, 88, 108) after machining of a workpiece, having at least one striker (10, 30, 50, 90, 110) for cut material adhering to the workpiece support (8, 88, 108), the striker (10, 30, 50, 90, 110) and the workpiece support (8, 88, 108) being movable relative to each other, thereby detaching cut material adhering to the latter.

2. A machine according to claim 1, **characterised in that** the direction of relative movement of the workpiece support (8, 88, 108) and the striker (10, 30, 50, 90, 110) for cut material adhering to the latter is transverse to the direction in which the workpiece is supported on the workpiece support (8, 88, 108).

3. A machine according to either of the preceding claims, **characterised in that** the striker (10, 30, 50) for cut material adhering to the workpiece support (8) is movable along the workpiece support (8).

4. A machine according to any one of the preceding claims having at least one workpiece transport arrangement (11; 3, 78) for loading at least one workpiece to be machined onto the workpiece support (8) and/or for removing cut material from the workpiece support (8) after machining of the workpiece, the workpiece transport arrangement (11; 3, 78) having at least one holder (12, 78) for the workpiece to be machined and/or for cut material to be removed and the workpiece support (8) and the holder (12, 78) being movable relative to each other, **characterised in that** the workpiece transport arrangement (11; 3, 78) is at least part of the arrangement (10, 11; 3, 10, 78) for producing relative movement of workpiece support (8) and cut material adhering thereto, the striker (10) for cut material that adheres to the workpiece support (8) being provided on the holder (12, 78) of the workpiece transport arrangement (11; 3,78).

5. A machine according to any one of the preceding claims, **characterised in that** there is provided as the striker (10) for cut material adhering to the workpiece support (8) at least one workpiece to be machined that is held at the holder (12, 78) of the workpiece transport arrangement (11; 3, 78) and/or corresponding free cut material (10) that is movable with the holder (12, 78) relative to the workpiece support (8).

6. A machine according to any one of the preceding claims having at least one workpiece transport arrangement (11; 3, 78) for removing free cut material (10) from the workpiece support (8) after machining of a workpiece, the workpiece support (8) and free cut material (10) held at the holder (12, 78) of the workpiece transport arrangement (11; 3, 78) being movable relative to each other, **characterised in that** there is provided as the striker (10) for cut material of the preceding workpiece-machining operation adhering to the workpiece support (8) free cut material (10) obtained **in that** operation and held at the holder (12, 78) of the workpiece transport arrangement (11; 3, 78).

7. A machine according to any one of the preceding claims, **characterised in that** the workpiece support (8) and the workpiece serving as the striker (10) for cut material adhering to the workpiece support (8) or the corresponding free cut material (10) are movable relative to each other transversely to the direction in which the workpiece is supported on the workpiece support (8).

8. A machine according to any one of the preceding claims, wherein the cutting device (2) and the workpiece support (8) are movable relative to each other in driven manner, **characterised in that** at least one striker (50, 10) for cut material adhering to the workpiece support (8), being coupled to the cutting device (2), is capable of relative movement.

9. A machine according to any one of the preceding claims, wherein the cutting device (2) is held on a machine portal (3) which spans the workpiece support (8) and is movable in driven manner relative to the workpiece support (8) transversely to the direction in which the workpiece is supported on the latter, **characterised in that** at least one striker (50, 10) for cut material adhering to the workpiece support (8) is mounted on the machine portal (3).

10. A machine according to any one of the preceding claims, **characterised in that** the workpiece support (88, 108) is movable in driven manner along at least one striker (90, 110) for cut material adhering to the workpiece support (88, 108).

11. A machine according to any one of the preceding claims, **characterised in that** the workpiece support (88, 108) is movable transversely to the direction in which the workpiece is supported on the workpiece support (88, 108), along at least one striker (90, 110) for cut material adhering thereto.

12. A machine according to any one of the preceding claims, **characterised in that** the workpiece support (108), being diverted at least once in the direction in which the workpiece is supported on the workwork support (108), is movable transversely to said direction.

13. A machine according to any one of the preceding claims, **characterised in that** the workpiece support (108) is constructed on a strand (120) of at least one endless circulating chain and/or a corresponding belt or the like and the said chain and/or the said belt or the like is movable along at least one striker (110) for cut material adhering to the workpiece support (108).

14. A machine according to any one of the preceding claims, having a computer control (14) for machine functions, **characterised in that** the arrangement (10, 11; 36; 3, 50; 3, 10, 78; 88, 90; 108, 110) for producing relative movement of workpiece support (8, 88, 108) and cut material adhering thereto is controllable by means of the computer control (14).

15. A machine according to any one of the preceding claims, **characterised in that** the striker (10, 30, 50, 90, 110) for cut material adhering to the workpiece support (8, 88, 108) and the workpiece support (8, 88, 108) are movable relative to each other transversely to the direction in which the workpiece is supported on the workpiece (8, 88, 108) routinely under control by means of the computer control (14) following a cutting operation on the workpiece, where applicable with the striker (10, 30, 50, 90, 110) striking against cut material adhering to the workpiece support (8, 88, 108).

16. A method for thermal cutting, especially for laser cutting, of workpieces, performed with a machine according to any one of the preceding claims, wherein, after machining of a workpiece, free cut material (10) and a workpiece support (8) are moved relative to each other, **characterised in that**, after machining of a workpiece, free cut material (10) and the workpiece support (8) are moved relative to each other transversely to the direction in which the workpiece is supported on the workpiece support (8), with free cut material (10) striking against cut material adhering to the workpiece support (8).

17. A method according to claim 16, **characterised in that**, before or with their relative movement transversely to the direction in which the workpiece is supported on the workpiece support (8), the free cut material (10) and the workpiece support (8) are moved relative to each other in the direction in which the workpiece is supported on the workpiece support (8) by an amount that is smaller than the dimension, in the latter direction, of cut material adhering to the workpiece support (8).

## Revendications

1. Machine de découpage thermique de pièces, en particulier découpeuse laser, comprenant au moins un support de pièce (8, 88, 108) pour la pièce à usiner ainsi qu'au moins un dispositif de découpage (2), **caractérisée par** au moins un dispositif mécanique (10, 11; 36 ; 3, 50 ; 3, 10, 78 ; 88, 90; 108, 110) destiné à générer un déplacement relatif du support de pièce (8, 88, 108) et d'un article à découper adhérant après l'usinage d'une pièce au support de pièce (8, 88, 108), avec au moins une butée (10, 30, 50, 90, 110) pour l'article à découper adhérant au support de pièce (8, 88, 108), la butée (10, 30, 50, 90, 110) et le support de pièce (8, 88, 108) étant mobiles l'un par rapport à l'autre en détachant l'article à découper adhérant à ce dernier.

2. Machine selon l'une des revendications précédentes, **caractérisée en ce que** la direction du déplacement relatif du support de pièce (8, 88, 108) et de la butée (10, 30, 50, 90, 110) pour l'article à découper adhérant à ce dernier s'étend transversalement à la direction de l'appui de la pièce sur le support de pièce (8, 88, 108).

3. Machine selon l'une des revendications précédentes, **caractérisée en ce que** la butée (10, 30, 50) pour l'article à découper adhérant au support de pièce (8) est mobile le long du support de pièce (8).

4. Machine selon l'une des revendications précédentes avec au moins un dispositif de transport de la pièce (11 ; 3, 78) destiné à charger le support de pièce (8) avec au moins une pièce à usiner et/ou à retirer l'article à découper du support de pièce (8) après l'usinage de la pièce, le dispositif de transport de la pièce (11 ; 3, 78) comprenant au moins un soutien (12, 78) pour la pièce à usiner et/ou pour l'article à découper à retirer et le support de pièce (8) et le soutien (12, 78) étant mobiles l'un par rapport à l'autre, **caractérisée en ce que** le dispositif de transport de la pièce (11 ; 3, 78) fait au moins partie du dispositif (10, 11; 3, 10, 78) destiné à générer un déplacement relatif du support de pièce (8) et de l'article à découper adhérant à celui-ci, la butée (10) pour l'article à découper adhérant au support de pièce (8) étant prévue sur le soutien (12, 78) du dispositif de transport de la pièce (11 ; 3, 78).

5. Machine selon l'une des revendications précédentes, **caractérisée en ce qu'**au moins une pièce à usiner maintenue sur le soutien (12, 78) du dispositif de transport de la pièce (11 ; 3, 78) et/ou un article à découper libre (10) correspondant, mobile avec le soutien (12, 78) par rapport au support de pièce (8), est prévue(e) comme butée (10) pour l'article à découper adhérant au support de pièce (8).

6. Machine selon l'une des revendications précédentes avec au moins un dispositif de transport de la pièce (11 ; 3, 78) destiné à retirer l'article à découper libre (10) du support de pièce (8) après l'usinage d'une pièce, le support de pièce (8) et l'article à découper libre maintenu sur le soutien (12, 78) du dispositif de transport de la pièce (11 ; 3, 78) étant mobiles l'un par rapport à l'autre, **caractérisée en ce qu'**un article à découper libre (10) maintenu sur le soutien (12, 78) du dispositif de transport de la pièce (11; 3, 78), produit au cours de l'opération d'usinage précédent de la pièce, est prévu comme butée (10) pour l'article à découper, adhérant au support de pièce (8).

7. Machine selon l'une des revendications précédentes, **caractérisée en ce que** le support de pièce (8) et la pièce servant de butée (10) pour l'article à découper adhérant au support de pièce (8) ou l'article à découper libre (10) correspondant sont mobiles l'un par rapport à l'autre transversalement à la direction de l'appui de la pièce sur le support de pièce (8).

8. Machine selon l'une des revendications précédentes, le dispositif de découpage (2) et le support de pièce (8) étant mobiles l'un par rapport à l'autre de façon entraînée, **caractérisée en ce qu'**au moins une butée (50, 10) pour l'article à découper adhérant au support de pièce (8) est relativement mobile de façon couplée au dispositif de découpage (2).

9. Machine selon l'une des revendications précédentes, le dispositif de découpage (2) étant maintenu sur un portail de machine (3), lequel chevauche le support de pièce (8) et est mobile de façon entraînée par rapport à ce dernier transversalement à la direction de l'appui de la pièce sur le support de pièce (8), **caractérisée en ce qu'**au moins une butée (50, 10) pour l'article à découper adhérant au support de pièce (8) est aménagée sur le portail de machine (3).

10. Machine selon l'une des revendications précédentes, **caractérisée en ce que** le support de pièce (88, 108) est mobile de façon entraînée le long d'au moins une butée (90, 110) pour l'article à découper adhérant audit support.

11. Machine selon l'une des revendications précédentes, **caractérisée en ce que** le support de pièce (88, 108) est mobile le long d'au moins une butée (90, 110) pour l'article à découper adhérant audit support transversalement à la direction de l'appui de la pièce sur le support de pièce (88, 108).

12. Machine selon l'une des revendications précédentes, **caractérisée en ce que** le support de pièce (108) est mobile sous l'effet d'au moins une simple déviation en direction de l'appui de la pièce sur le support de pièce (108) transversalement à la direction citée.

13. Machine selon l'une des revendications précédentes, **caractérisée en ce que** le support de pièce (108) est conçu sur un brin (120) d'au moins une chaîne mobile de manière circulaire sans fin et/ou d'une bande correspondante ou similaire et la chaîne citée et/ou la bande citée ou similaire est mobile le long d'au moins une butée (110) pour l'article à découper adhérent au support de pièce (108).

14. Machine selon l'une des revendications précédentes comprenant une commande informatique (14) pour des fonctions de machine, **caractérisée en ce que** le dispositif (10, 11; 36; 3, 50 ; 3, 10, 78; 88, 90 ; 108, 110) destiné à générer un déplacement relatif du support de pièce (8, 88, 108) et de l'article à découper adhérant à celui-ci peut être commandé au moyen de la commande informatique (14).

15. Machine selon l'une des revendications précédentes, **caractérisée en ce que** la butée (10, 30, 50, 90, 110) pour l'article à découper adhérant au support de pièce (8, 88, 108) et le support de pièce (8, 88, 108) sont mobiles l'un par rapport à l'autre de manière commandée, transversalement à la direction de l'appui de la pièce sur le support de pièce (8, 88, 108), après un usinage de découpage de la pièce au moyen de la commande informatique (14) de façon routinière, le cas échéant en frappant la butée (10, 30, 50, 90, 110) contre l'article à découper adhérant au support de pièce (8, 88, 108).

16. Procédé de découpage thermique de pièces, en particulier de découpage au laser, réalisé avec une machine selon l'une des revendications précédentes, un article à découper libre (10) et un support de pièce (8) étant déplacés l'un par rapport à l'autre après l'usinage d'une pièce, **caractérisé en ce qu'**après l'usinage d'une pièce, l'article à découper libre (10) et le support de pièce (8) sont déplacés l'un par rapport à l'autre transversalement à la direction de l'appui de la pièce sur le support de pièce (8), en frappant l'article à découper libre (10) contre l'article à découper adhérant au support de pièce (8).

17. Procédé selon la revendication 16, **caractérisé en ce que** l'article à découper libre (10) et le support de pièce (8), avant ou avec son déplacement relatif, sont déplacés l'un par rapport à l'autre, transversalement à la direction de l'appui de la pièce sur le support de pièce (8) en direction de l'appui de la pièce sur le support de pièce (8), sur une distance qui est inférieure à la dimension de l'article à découper adhérant au support de pièce (8) dans la direction citée en dernier.
